# EUROPEAN PATENT APPLICATION

(11) **EP 4 686 836 A1**
(43) Date of publication of application: **04.02.2026**
(21) Application number: 24398014.1
(22) Date of filing: 31.07.2024
(51) Int. Cl.: F16B 5/06, F16B 13/08

(54) **CLAMPING DEVICE FOR JOINING PARTS WITH A HOLE**

(71) Applicant: GA Moldes, Lda., 2430-528 Marinha Grande (PT); Simões da Mina, José Manuel, 2445-020 Burinhosa, Pataias (PT)
(72) Inventor: Simões da Mina, José Manuel, 2445-020 BURINHOSA, PATAIAS (PT); Coutinho Alexandre, Rui, 2445-728 MARTINGANÇA (PT); Coutinho Alexandre, João, 2445-728 MARTINGANÇA (PT)
(74) Representative: Pelayo de Sousa Henriques, Rui

(57) **Abstract**

The present invention relates to a clamping device (1) for joining any parts with a hole (4), characterized by comprising a pin (2) and a plug (3), by the pin comprising a head and a rod equipped with rack and by the plug being equipped with a hollow area and this hollow area being equipped with locking teeth.

## Description

The present invention relates to a clamping device for joining any parts with a hole.

The word part is used here in a broad sense and therefore it can be any object.

It is therefore applicable in the most diverse areas, whether for domestic use, particularly in repairs or assemblies, or in the industrial sphere, mainly in the automotive industry, whether in manufacturing or repair.

### STATE OF THE ART

Multiple types of clamping devices are known, which can be designated in different ways, with clamps falling within this group of devices.

The clamp, equipped with a strap and a hollow structure, the strap being toothed so as to engage the latches of the hollow structure, was invented by Mr. Maurus C. Logan in 1958, US3,022,557.

After that, there were other inventions, namely the one relating to patent WO2008/025569.

However, clamps of this type are suitable for joining in a bundle, that is, joining by hugging a set of parts.

Even if the parts to be joined have a hole for the strap to pass through, their union cannot align the parts so that the respective holes are concentric, which, for many types of joint, is an inconvenience.

Furthermore, when joining parts using the so-called clamps, there is a risk of the joint rests with a gap.

Thus, the present invention aims to join parts with a hole, or ring, without the aforementioned inconveniences and in a much more efficient and cheaper way than a traditional connection using screws and nuts.

### DESCRIPTION OF THE INVENTION

The present invention is designated by a clamping device for joining parts with a hole, the clamping device integrating a pin and a plug.

The pin is provided with a head and a rod, with the head serving as a stop and the rod having a rack.

In turn, the plug, which functions as a blocker and tightening element, has a hollow area equipped with locking teeth.

The invented clamping device allows the joining of two or more parts with a hole, being their joining a very simple operation.

Once the holes in the parts to be joined are aligned, the pin is inserted into one of the outer sides of the set of said parts.

The rod goes through all the holes in the parts to be joined.

When the rod appears on the other outer side of the parts to be joined, the hollow area of the plug, an area equipped with locking teeth, is aligned with the rod of the pin so that its teeth slide between the locking teeth of the hollow area of the plug.

As soon as the first tooth on the rod engages with the first locking tooth, it is no longer possible to reverse the movement, because the locking teeth and the teeth of the rod have a conjugate shape that does not allow reverse movement.

The operation of joining the parts is completed when the head of the pin works as a stop on one of the outer sides of the set of parts to be joined and the plug works as a stop on the other outer side of the same parts.

This results in a joint without gaps and in which the holes in the parts are concentric.

Once the operation is complete, if the rod of the pin sticks out of the plug, this excess can be cut off with a cutting tool, namely a pocket knife or a box cutter.

For a better understanding of the invention, below are the references and names of the parts of both the pin and the plug, these two elements constituting the clamping device:
1 - clamping device
2 - pin
   21 - head
   22 - rod
      221 - tip
      222 - hole
      223 - rack
         2231 - tooth
3 - plug
   31 - hollow area
      311 - gap
   32 - locking teeth
   33 - mouth
   34 - tear
   35 - body
   36 - front of the plug
   37 - back or backside of the plug
4 - part with a hole

The rod (22) of the pin (2) may have cross-sections of different shapes, namely rectangular or quadrangular, and may be equipped with a tip (221).

The purpose of the tip is to facilitate the routing of the rod into the hollow area (31) of the plug (3).

This is why the tip (221) will preferably be thinner than the rack (223) of the rod and will be in the shape of a latch.

This tip (221) may be equipped with a hole (222) to which it is possible to tie a thread, or attach a wire, with the aim of guiding the pin to the holes in the parts to be joined.

This is important when there is little space to access the holes of the parts.

It can be particularly important when it comes to joining parts that are difficult to access, for example, in a vehicle engine or in other similar situations.

The rod (22) may not be provided with a tip (221) and, in this case, the hole (222) may be located at the end of the rack (223).

The invented clamping device (1) for joining parts with a hole is characterized by comprising a pin (2), by comprising a plug (3), by the pin comprising a head (21) and a rod (22), by the rod being equipped with at least one rack (223), by the plug being equipped with a hollow area (31) and by this hollow area being equipped with locking teeth (32).

The invented clamping device (1) is also characterized in that inside the hollow area there may be two opposing rows of locking teeth (32) - which can, for simplification, be designated upper locking teeth and lower locking teeth - and by the rod (22), correspondingly, be equipped with opposing racks, or designated as the upper rack and the lower rack.

On the other hand, in a possible embodiment of the invention, it is characterized in that the upper locking teeth and the lower locking teeth are out of phase with each other, or the teeth have discrepancies between them, and this discrepancy is combined with the discrepancy between the upper and lower teeth (2231) of the respective racks (223) of the rod (22).

This discrepancy has the advantage of making it easier to insert the rod into the plug.

When the rack of the rod, or the racks of the rod, enter the hollow area (31) of the plug and the first tooth (2231) of one of the racks engages with the first locking tooth (32), then it is no longer possible to reverse the approach movement between the head (21) of the pin and the plug (3).

The invented clamping device is also characterized in that the plug (3) is equipped with one or more tears (34).

These tears make it possible to attach, for example, a hook or clip to the plug (3) to hang or secure an object.

If the present clamping device is used to join two shelves, for example, a hook can be attached to the plug using one of the tears and rulers and squares can be hung on that hook.

In order for the rod of the pin to fit or slide without difficulty in the hollow area of the plug where the locking teeth are incorporated, a gap (311) is provided for each row of locking teeth.

The gap (311) can be materialized in a channel with a half-cane-shaped bottom and allows better accommodation between a row of locking teeth (32) and the respective rack (223).

### DESCRIPTION OF THE FIGURES

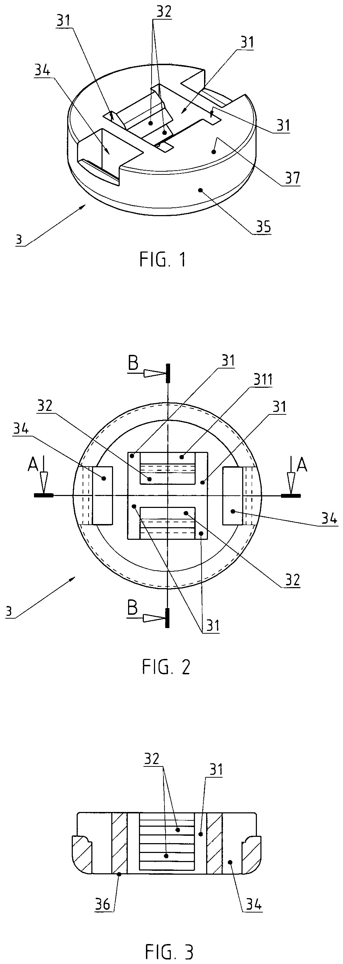

For a proper understanding of the invention, a set of drawings is presented which forms an integral part of the invention, but which should not limit it.
It can be seen in figure 1, the representation, in perspective, of a plug (3), seeing the back of the plug (37), showing the mouth for the pin entry, showing two tears (34), also showing the hollow area (31), two locking teeth (32) and the body (35);
In figure 2, the representation of the plug (3) from the previous figure, seen from the front, showing the tears (34), the hollow area (31), the locking teeth (32), lower and upper, and the respective gaps (311) and indicating the AA and BB cuts;
In figure 3, the representation of the AA cut, showing the tears (34), each of which has an opening at the front of the plug (36) and another opening located in the body of the plug - with each tear (34) developing in a way so that the openings communicate with each other - and also showing the locking teeth (32) and the hollow area (31);

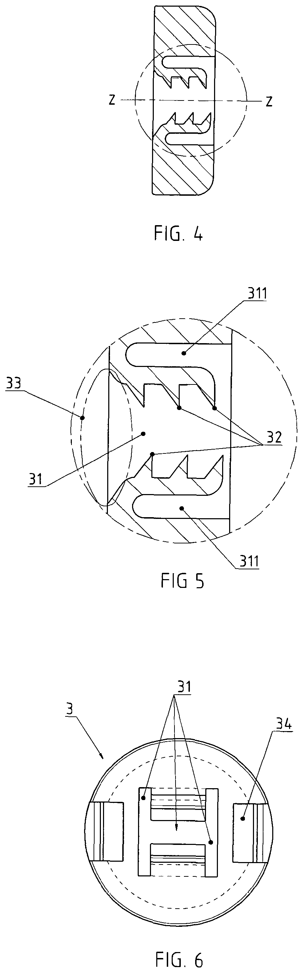

In figure 4, the representation of the BB cut, showing that the hollow area presents asymmetry in relation to the Z axis, highlighting that the upper locking teeth are out of phase with the lower ones;
In figure 5, the representation of the detail shown in the previous figure, showing the locking teeth (32), the hollow area (31), the mouth (33) and the gaps (311);
In figure 6, the representation of the plug (3) of figure 1, seeing the back of the plug, showing the tears (34) and the hollow area (31);

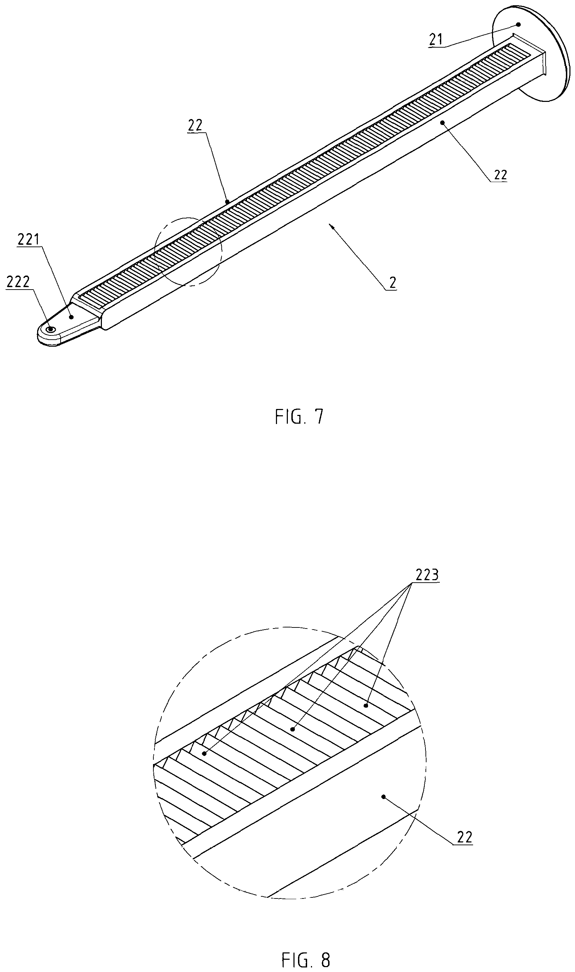

In figure 7, the representation in perspective of the pin (2), showing the head (21), the rod (22), and, as part of this, the tip (221) equipped with a hole (222);
In figure 8, the representation of the detail showed in the previous figure, showing the rod (22) and the rack (223);

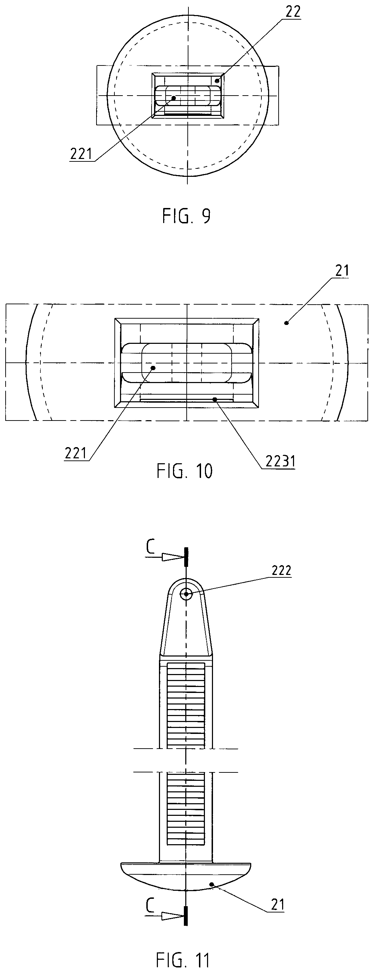

In figure 9, the representation of the pin, looking at the tip (221) of the pin from the front, also showing the rod (22) ;
In figure 10, the representation of the detail shown in the previous figure, showing the tip (221), the head (21) seen from behind and the first tooth (2231) of the rack;
In figure 11, the enlarged representation of a detail of the top view of the pin, with the hole (222) visible, the head (21) and the CC cut being indicated;

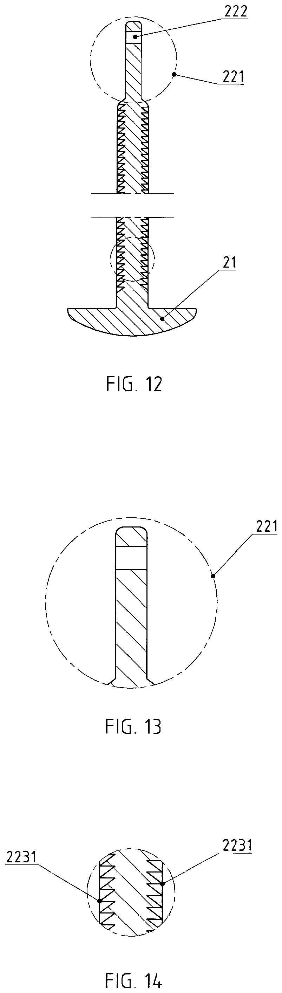

In figure 12, the representation of the CC cut showed in the previous figure, being seen the head (21), the tip (221) and the hole (222);
In figure 13, the representation, in detail, of the tip (221) ;
In figure 14, the area of the rack showed in figure 12 is represented in detail, on a scale five times larger, being evident the discrepancy between the upper and lower teeth (2231);

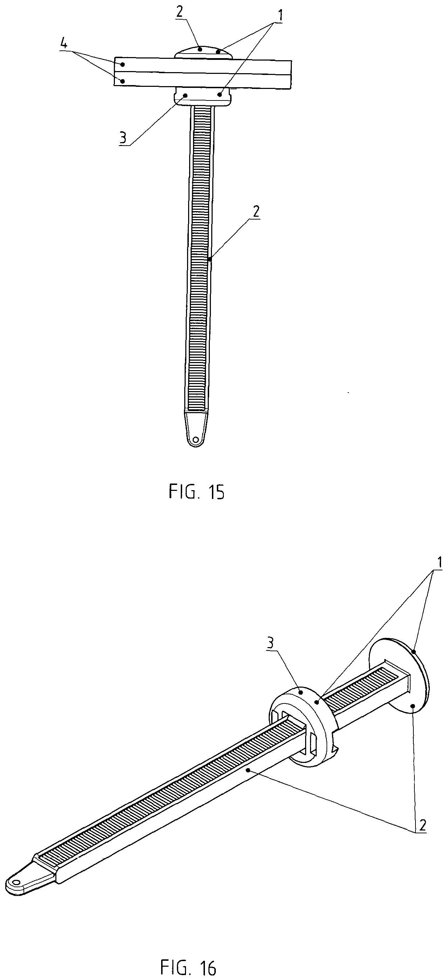

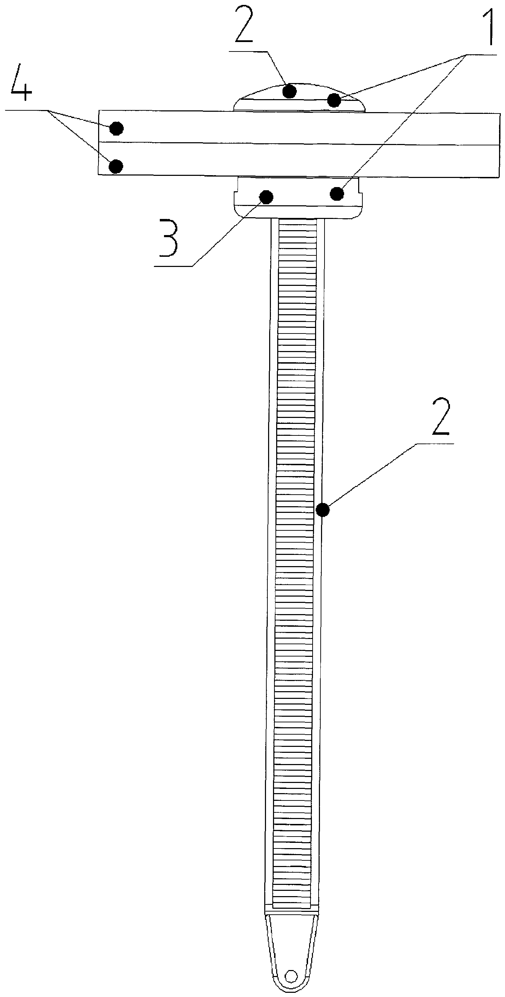

In figure 15, the union of two parts with a hole (4) is represented by means of the invented clamping device (1) equipped with a pin (2) and a plug (3);
In figure 16, a possible materialization of the clamping device (1) is represented, equipped with a pin (2) and a plug (3).

## Claims

1. - Clamping device (1) for joining parts with a hole (4) **characterized by** comprising a pin (2), by comprising a plug (3), by the pin comprising a head (21) and a rod (22), by the rod being equipped with rack (223), by the plug being equipped with a hollow area (31) and by this hollow area being equipped with locking teeth (32).

2. - Clamping device (1) for joining parts with a hole (4) according to claim no. 1, **characterized in that** the hollow area (31) of the plug (3) being equipped with opposing locking teeth (32) and by, correspondingly, the rod being equipped with opposing racks (223).

3. - Clamping device (1) for joining parts with a hole (4) according to claim no. 1, **characterized in that** the plug (3) being equipped with one or more tears (34).

4. - Clamping device (1) for joining parts with a hole (4) according to claim no. 1, **characterized in that** the hollow area (31) of the plug being equipped with gaps (311).

5. - Clamping device (1) for joining parts with a hole (4) according to claim no. 2, **characterized in that** the opposing locking teeth (32) are out of phase with each other and by, correspondingly, the teeth (2231) of the opposing racks (223) are out of phase with each other.

6. - Clamping device (1) for joining parts with a hole (4) according to claim no. 1, **characterized in that** the rod (22) being equipped with a tip (221).

7. - Clamping device (1) for joining parts with a hole (4) according to claim no. 6, **characterized in that** the tip (221) of the rod being equipped with a hole (222).
